# FASCICULE DE BREVET EUROPEEN

(11) **EP 0 773 344 B1**
(45) Date de publication et mention de la délivrance du brevet: **15.03.2000**
(21) Numéro de dépôt: 96402340.2
(22) Date de dépôt: 04.11.1996
(51) Int. Cl.: E21B 47/01, G01V 11/00, E21B 23/00

(54) **Dispositif d'exploration d'une formation souterraine traversée par un puits horizontal comportant plusieurs sondes ancrables**
Vorrichtung zur Erkundung einer horizontal durchbohrten Gesteinsformation mit mehreren verankerbaren Messsonden
Device for exploring a downhole formation traversed by a horizontal borehole with several anchorable probes

(30) Priorité: 10.11.1995 FR 9513447
(43) Date de publication de la demande: 14.05.1997
(73) Titulaire: INSTITUT FRANCAIS DU PETROLE, 92852 Rueil-Malmaison Cedex (FR)
(72) Inventeur: Meynier, Patrick, 78400 Chatou (FR)

(56) Documents cités:
- EP-A- 0 165 154
- EP-A- 0 291 005

## Description

La présente invention concerne un dispositif d'exploration d'une formation souterraine traversée par un puits, adapté à fonctionner dans des portions de puits où sa progression sous l'effet de la gravité est difficile et notamment dans des portions de puits horizontales ou fortement déviées par rapport à la verticale.

Le dispositif selon l'invention convient notamment pour réaliser des opérations de prospection sismique du sous sol.

Suivant une technique connue, on réalise l'exploration sismique d'une formation géologique en disposant dans un ou plusieurs puits forés au travers de cette formation un ensemble de réception et/ou d'émission pour capter des signaux renvoyés par les discontinuités du sous-sol en réponse à des ondes sismiques ou acoustiques émises dans un puits ou à la surface du sol.

Les équipements sismiques peuvent être utilisées dans des portions verticales ou suffisamment verticales des puits et dans ce cas, ils y sont descendus par l'effet de la gravité.

Les équipements sismiques sont placés par exemple dans un outil de puits ou dans plusieurs outils de puits disposés en chapelet le long d'un câble électro-porteur, comme décrits par exemple dans les brevets FR 2 501 380, FR 2 616 230, FR 2 636 741 du demandeur.

Par les brevets FR 2 656 034, FR 2 674 029 du demandeur, on connait une méthode de prospection sismique d'une formation géologique comportant l'utilisation d'un dispositif de réception comprenant une ou plusieurs unités de réception qui sont mis en place dans un puits vertical au moyen d'une colonne de production. Les unités sont conduites jusqu'à la profondeur d'installation et sont plaquées contre la paroi du puits ou bien contre un tube de cuvelage. Le couplage peut être fait au moyen de patins ou de bras pouvant s'écarter de la colonne sous l'action de ressorts. Ces unités peuvent encore être placées dans des boitiers que l'on écarte de la colonne et que l'on découple mécaniquement de celle-ci.

Par le brevet FR 2 703 470 du demandeur, on connait un procédé d'installation dans un ou plusieurs puits traversant une zone souterraine, d'un ensemble d'émission-réception d'ondes sismiques ou acoustiques comportant par exemple des transducteurs émetteurs-récepteurs qui peuvent être installés derrière une colonne tubulaire utilisée pour d'autres fonctions et reliées de façon permanente ou non par des câbles à une station de commande et d'enregistrement en surface. Avec un tel ensemble, on réalise par exemple des diagraphies des couches environnant chaque puits en ondes P ou S, et effectuer ainsi une surveillance de longue durée d'un gisement.

Par le brevet FR 2 655 373 du demandeur, on connait aussi un système pour conduire un dispositif d'exploration non rigide comportant plusieurs sondes réunies les unes aux autres par des portions de câble électro-porteur, dans un puits où sa progression par l'effet de la gravité, est gênée, en raison notamment de l'inclinaison du puits par rapport à la verticale. On guide ce dispositif vers une zone de puits déviée au moyen d'une colonne tubulaire formée d'un train de tiges. Un dispositif de connexion électrique différée est utilisé pour connecter l'ensemble de sondes à un câble relié à une station de commande et d'enregistrement en surface. Un courant de fluide est établi dans la colonne pour pousser la première sonde hors de celle-ci et permettre l'ouverture de bras d'ancrage. Par une traction sur la colonne, on fait alors sortir l'ensemble des sondes dans le puits et l'on procède à des cycles de mesure.

Par la demande de brevet FR 95/12265, on connait un dispositif d'exploration d'une formation souterraine traversée par un puits, adapté à fonctionner dans des portions de puits où sa progression sous l'effet de la gravité est difficile et notamment dans des portions de puits horizontales ou fortement déviées par rapport à la verticale. Il comporte une pluralité de modules d'exploration rigides (Mi) interconnectés bout à bout comprenant chacun un élément tubulaire ou tige rigide (1) muni d'une lame flexible pour plaquer contre la paroi du puits un boitier contenant des éléments sensibles, un câble de liaison connecté à une station centrale en surface; et un bloc de raccordement comprenant un système d'acquisition relié aux différents modules par un faisceau de conducteurs électriques passant à l'intérieur des éléments tubulaires, et des moyens de connexion électrique différée en milieu humide entre le câble de liaison et le système d'acquisition, ce bloc de raccordement étant interposé entre l'ensemble des modules d'exploration et une colonne rigide reliée à des moyens de maneuvre en surface pour conduire l'ensemble d'exploration jusque dans la portion du puits choisie.

Le dispositif selon l'invention permet l'exploration d'une formation souterraine traversée par un puits présentant des portions de puits où sa progression sous l'effet de la gravité est difficile et notamment des portions de puits horizontales ou fortement déviées par rapport à la verticale.

Le dispositif qui comporte une pluralité de modules d'exploration interconnectés bout à bout, est caractérisé en ce que chaque module comprend un tube rigide dont la paroi comporte des ouvertures allongées, une sonde allongé comprenant un ou plusieurs capteurs, disposée à l'intérieur du tube, rigide, des moyens de guidage de la sonde radialement entre une position de repos et une position de travail excentrée où elle est plaquée contre la paroi du puits, des moyens de découplage acoustique entre la sonde et le tube rigide, chaque sonde étant pourvue d'au moins un bras d'ancrage déplaçable entre une position de fermeture et une position d'ouverture pour laquelle la sonde est en position de travail, et de moyens pour déclencher sur commande l'ouverture du bras d'ancrage, le dispositif comportant une colonne pour déplacer l'ensemble des modules d'exploration dans le puits et des moyens de connexion des différentes sondes à une station de surface.

Le dispositif peut comporter des moyens de rappel de la sonde vers sa position de repos constitués par exemple de ressorts et éventuellement d'un élément solidaire du tube rigide qui coopére avec le bras d'ancrage.

Les moyens de guidage comportent par exemple des pièces de guidage associées à la sonde à ses extrémités, des glissières pour les pièces de guidage, et les moyens de découplage comportent par exemple des blocs en un matériau amortisseur interposés entre la sonde et les pièces de guidage.

Les capteurs peuvent être placés dans les corps de sonde ou bien encore dans des patins d'ancrage à l'extrémité des bras d'ancrage.

Le dispositif comporte par exemple un ensemble de liaison électro-mécanique commun reliant les différentes sondes entre elles et avec une station de surface. Cette liaison électro-mécanique commune peut comporter un bloc de raccordement comprenant un système de collecte relié aux différents modules par un câble commun multi-lignes traversant chaque sonde dont les lignes sont treliées aux capteurs, pour centraliser des signaux qui en sont issus, et des moyens de connexion électrique différée en milieu humide entre un câble de liaison relié à la station de surface et le système de collecte, ce bloc de raccordement étant interposé entre l'ensemble des modules d'exploration et ladite colonne

Suivant un mode de réalisation, les moyens de connexion électrique différée, comportent une fiche mâle multi-contacts, un prolongement tubulaire pour le guidage dans le bloc de raccordement, d'une prise femelle multi-contacts reliée au câble multi-conducteurs, et des moyens de verrouillage de la prise femelle en position d'engagement.

Le dispositif peut comporter aussi un élément tubulaire de tête comportant un balourd et un indicateur d'orientation pour déterminer le positionnement angulaire de l'ensemble des modules d'exploration par rapport à la verticale.

De préférence, la colonne comporte un raccord spécial à fenêtre pour le passage du câble de liaison.

Le dispositif selon l'invention est avantageux en ce que :
- il peut être constitué par interconnexion bout à bout d'un nombre variable de modules d'exploration banalisés associés par l'intermédiaire d'un bloc de raccordement, à un train de tiges que l'on allonge suffisamment pour le pousser jusque dans une portion de puits soit très inclinée soit conformée de telle manière qu'elle empêche la libre descente de l'ensemble des modules;
- les différentes sondes en position de repos sont protégées des chocs éventuels par les différents tubes, durant toutes les phases de déplacement du dispositif dans le puits, et sans avoir à les en extraire, peuvent être facilement plaquées contre la paroi du puits de façon à coupler les capteurs avec les formations environnant le puits

D'autres caractéristiques et avantages du dispositif selon l'invention, apparaîtront à la lecture de la description ci-après de modes de réalisation décrits à titre d'exemples non limitatifs, en se référant aux dessins annexés où :
- la Fig. 1 montre schématiquement l'ensemble du dispositif suivant un premier mode de réalisation, mis en place dans un puits dont une partie est horizontale;
- la Fig.2 montre schématiquement en coupe l'agencement de chaque module d'exploration;
- la Fig.3 montre schématiquement en coupe transversale une sonde dans son tube de protection;
- la Fig.4 montre schématiquement un élément de guidage de chaque sonde dans son déplacement latéral; et
- la Fig.5 montre schématiquement en coupe un bloc de raccordement de l'ensemble des modules d'exploration à un train de tiges remontant jusqu'à la surface.

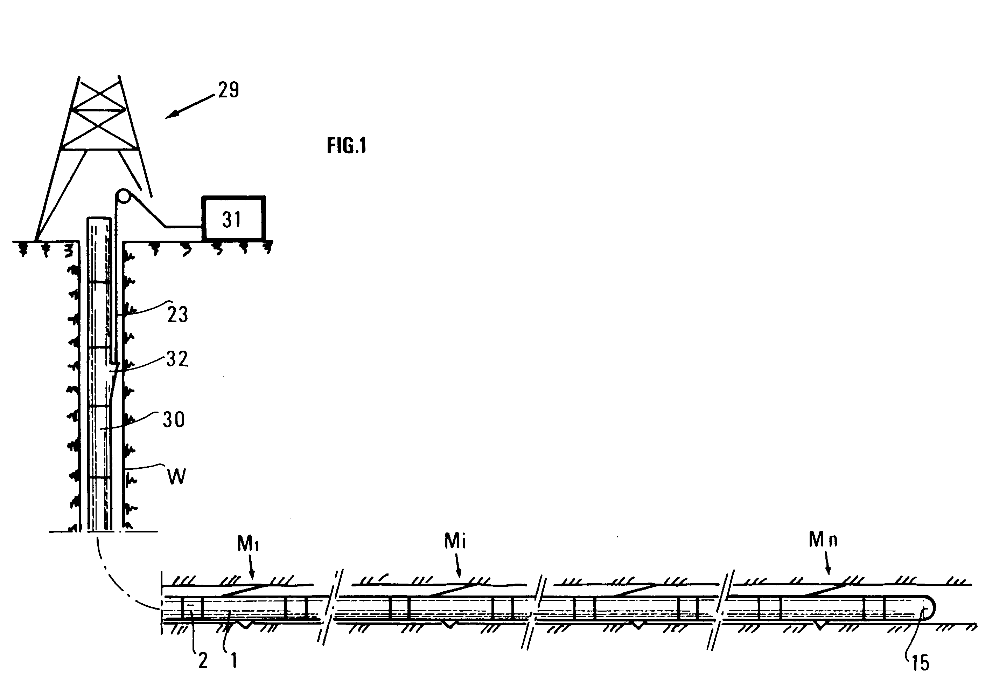

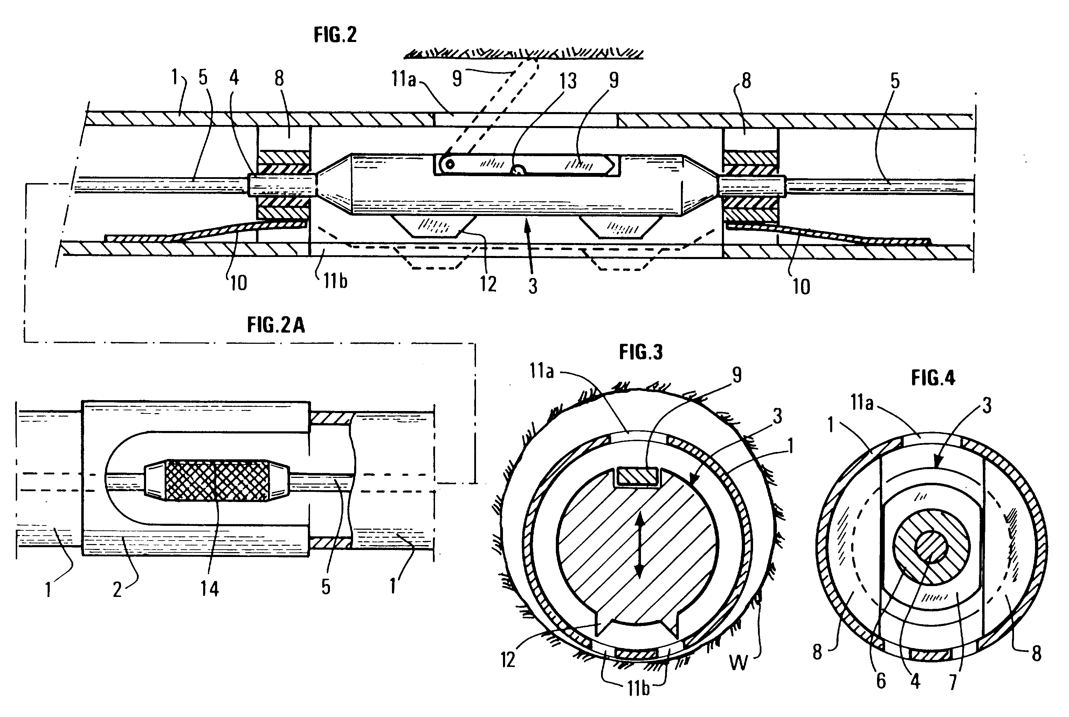

Le dispositif est constitué (Fig.1, 2) d'un ensemble de modules M1, Mi, Mi+1, ..., Mn interconnectés bout à bout, adapté à être descendu dans un puits W présentant des portions horizontales ou fortement inclinées par rapport à la verticale. Chacun de ces modules Mi comporte un tube rigide 1, terminé à ses deux extrémités opposées par un embout de fixation 2 pour son raccordement (par vissage par exemple) avec l'extrémité d'un tube 1 adjacent.

A l'intérieur de chaque tube rigide 1, est disposée une sonde 3 pourvue de logements pour un ou plusieurs boitiers d'éléments sensibles non représentés. Ces boitiers peuvent être fixes par rapport au corps de la sonde ou éventuellement découplés élastiquement par rapport à lui, comme décrit dans lre brevet FR 2 561 394. A chacune des extrémités, la sonde 3 est munie d'un embout d'étanchéité 4 au travers duquel passe une portion d'un câble multi-conducteurs 5 d'un type utilisé couramment pour les transmissions de données dans les puits. Chaque embout 4 est entouré d'un anneau 6 réalisé en un matériau amortisseur tel qu'un élastomère, et cet anneau est logé dans une pièce de support 7 adaptée à se déplacer dans une glissière de guidage 8 solidaire du tube rigide.

Cette sonde comporte un bras d'ancrage 9 déplaçable entre une position refermée en appui contre le corps de la sonde 3 et une position écartée (en pointillé sur la Fig. 2) où il est couplé avec la paroi du puits W par des moyens moteurs (non représentés).

Des moyens élastiques 10 tels que des lames de ressort, sont interposés entre chaque anneau amortisseur 6 et le tube 1, de façon à rappeler la sonde 3 vers une position centrale de repos.

Pour permettre l'écartement du bras 9, une ouverture allongée 11a est ménagée dans le tube rigide 3 dans le plan diamétral contenant l'axe de la glissière 8. Symétriquement par rapport à ce plan, et du côté opposé au bras 9, (cf. Fig.3) la sonde 3 comporte des sabots de couplage 12. Des ouvertures 11b sont ménagées dans la paroi du tube rigide 1 de façon que ces sabots 12 puissent venir en appui contre la paroi du puits quand, à l'ouverture du bras 9, la sonde est poussée vers une position d'ancrage (en pointillé sur la Fig. 2).

Une tige 13 formant butée, est fixée transversalement dans le tube 1, à une position telle que le bras vienne en appui contre elle à sa fermeture au cas où les ressorts de rappel 10 s'avèrent insuffisants (à cause d'un couplage trop étroit entre la sonde et la paroi du puits) pour ramener la sonde 3 vers sa position de repos.

Un connecteur multibroches 14 (Fig. 2) est disposé à l'intérieur de chaque manchon de raccordement 2. Aux broches de ce connecteur 3, sont soudés les différentes lignes du câble multi-conducteurs 5. Les lignes permettent la transmission des signaux captés par les récepteurs dans le corps de la sonde.

Pour établir cette interconnexion à la fois mécanique et électrique des différents modules, on peut utiliser par exemple un système de raccordement analogue à celui décrit dans le brevet EP 290.338 du demandeur.

L'ensemble des modules interconnectés bout à bout, est associé (Fig. 1) à une première extrémité à un élément tubulaire de tête 15 pourvue d'un balourd et d'un indicateur d'orientation (non représenté) destiné à déterminer l'orientation du balourd relativement au plan vertical. On peut utiliser par exemple un indicateur d'un type connu comportant une masselotte pendulaire au contact d'une piste de potentiomètre, cet indicateur étant connecté à une ligne du câble multi-conducteurs 5.

Pour établir cette interconnexion à la fois mécanique et électrique des différents modules, on peut utiliser par exemple un système de raccordement analogue à celui décrit dans le brevet EP 290 338 du demandeur.

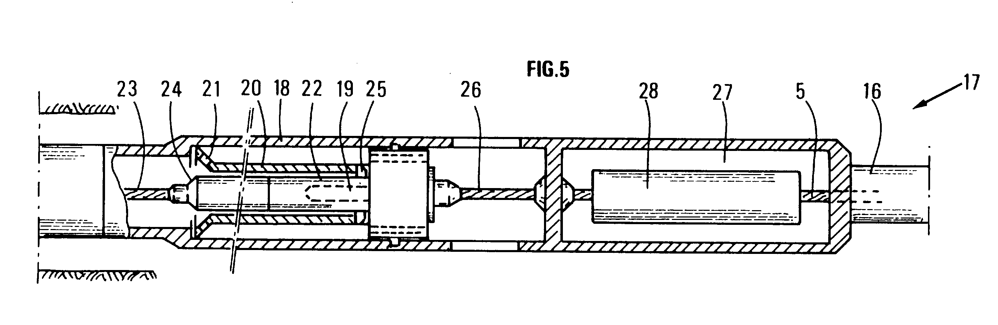

A l'extrémité opposée de l'ensemble de modules, l'élément tubulaire M1 est relié par une tige 16, à un bloc de raccordement 17 pourvu de moyens de connexion électrique différée en milieu humide. Le bloc 17 comporte (Fig. 5) un corps tubulaire 18, une fiche mâle multi-contacts 19 orientée suivant l'axe du corps 18, au centre d'un prolongement tubulaire de guidage 20 de section inférieure à celle du corps qui est terminé par une collerette 21. Ce prolongement 20 sert au guidage d'une prise femelle multi-contacts 22, connectée aux différents conducteurs d'un câble multi-conducteurs 23, qui est adaptée à venir s'emboîter sur la fiche mâle 19. La prise 22 est surmontée d'une barre de lestage tubulaire 24. Des verrous 25 pouvant être télécommandés depuis la surface, permettent de bloquer la prise en position d'enfichage sur la fiche 19.

Un câble 26 relie la fiche multi-contacts 19 à un compartiment étanche 27 du corps tubulaire 17 contenant un système de collecte et de transmission 28 tel que décrit par exemple dans le brevet FR 2 688 896 du demandeur "télémétrie capteurs permanents"). Le bloc de raccordement 17 est relié à des moyens de manoeuvre 29 en surface par l'intermédiaire d'un train de tiges 30.

Le système 28 reçoit les signaux transmis jusqu'à lui par les différentes lignes du câble multi-conducteurs 5. Il les numérise et les code pour leur transmission par le câble 23 à une station centrale 31 de commande et d'enregistrement placée en surface.

Suivant un agencement connu notamment par le brevet FR-A-2 547 861 du demandeur, la connexion entre le câble multi-conducteurs 23 et la station centrale 31 est facilitée par l'emploi d'un raccord spécial à fenêtre 32 ("side entry sub"), permettant, une fois qu'il est en place, de modifier la longueur du train de tiges 30 sans avoir à interrompre les liaisons conductrices.

On peut constituer par exemple un ensemble d'exploration comportant douze éléments tubulaires 1 d'une dizaine de mètres de long, en acier en aluminium ou en fibre de verre, associés chacun à un "triphone", et renfermant par exemple un connecteur électrique 20 à 61 broches permettant également la connexion électrique de l'indicateur d'orientation dans la section de tête 24.

### Fonctionnement

La mise en place de l'ensemble des modules d'exploration M1 à Mn jusque dans une zone d'intervention dans un puits s'effectue de la façon suivante.

On engage dans le puits l'élément tubulaire de tête 15 et, par interconnexions successives bout à bout, les différents modules d'exploration M1 à Mn, la tige intercalaire 16, le bloc de raccordement 17 et éventuellement un certain nombre de sections du train de tiges 30. On fixe ensuite le raccord spécial à fenêtre 32 dans lequel est introduit la prise multi-contacts 22 surmontée de sa barre de charge 24. Une tête d'injection (non représentée) est ensuite associée au train de tiges 30 pour pomper la prise multi-contacts 22 jusqu'à ce qu'elle vienne s'enficher sur la fiche 19 du bloc de raccordement 17.

On rajoute alors suffisamment de sections au train de tiges 30 de façon à amener l'ensemble de modules d'exploration M1-Mn jusqu'à la zone du puits où l'on va procéder à des opérations d'exploration. En surveillant depuis la station de surface 31 les indications du détecteur d'orientation dans l'élément de tête à balourd 15 et en faisant tourner suffisamment sur lui-même le train de tiges 30 au cours de sa progression, on peut orienter les différents modules d'exploration M1 à Mn de façon que les bras d'ancrage soient bien dans un même plan de pivotement, le plan vertical par exemple, et donc de façon aussi que les différents capteurs se trouvent couplés avec la paroi du puits sensiblement suivant un alignement commun. On télécommande alors l'ouverture des bras 9 des différents modules par action sur les moyens moteurs depuis la station de surface pour coupler les sondes avec les formations environnant le puits.

On peut par exemple disposer une source sismique en surface ou dans un autre puits, et des capteurs sismiques dans les sondes des différents modules M1-Mn, et procéder à des cycles d'émission-réception avec enregistrements à la station de surface 31 des signaux collectés par l'ensemble d'acquisition 28 et transmis par le câble 23.

L'ensemble des modules peut être déplacé à volonté par addition (ou retrait) au train de tiges 30 de sections supplémentaires, de façon à explorer la formation sur une plus grande longueur de puits et réaliser des couvertures multiples.

Comme décrit dans les brevets FR 2 613 159, FR 2 613 496. FR 2 616 230 déjà cités, les capteurs dans les différents modules d'exploration M1-Mn peuvent être associés à des circuits électroniques locaux avec des fonctions plus ou moins étendues. Il peut s'agir de circuits analogiques locaux d'amplification et de filtrage, l'acquisition, la numérisation et la transmission codée étant assurée par le système 28 dans le bloc de raccordement. Dans le cas où le nombre n de modules interconnectés le justifie, chaque sonde peut comporter des circuits locaux d'acquisition et de numérisation. Les données numérisées issus des différents modules d'exploration M1-Mn sont collectés alors par le système 28 dans le bloc de raccordement 28, qui les code et les transmet à la station 31 de surface.

On ne sortirait pas du cadre de l'invention en utilisant des éléments tubulaires 1 pourvus suivant une technique connue, de fentes destinées à réduire la vitesse de propagation des ondes le long de l'ensemble de modules.

On ne sortirait pas du cadre de l'invention en associant à l'ensemble des modules d'exploration M1 à Mn, une section supplémentaire renfermant une source de signaux acoustiques ou sismiques, ou bien en plaçant dans les différentes sondes des transducteurs émetteurs et récepteurs.

## Revendications

1. Dispositif d'exploration d'une formation souterraine traversée par un puits, adapté à fonctionner dans des portions de puits (W) où sa progression sous l'effet de la gravité est difficile et notamment dans des portions de puits horizontales ou fortement déviées par rapport à la verticale, qui comporte une pluralité de modules d'exploration (M1-Mn) interconnectés bout à bout, caractérisé en ce que chaque module comprend un tube rigide (1) dont la paroi comporte des ouvertures allongées (11a, 11b), une sonde allongée (3) comprenant un ou plusieurs capteurs, disposée à l'intérieur du tube, rigide (1), des moyens de guidage (7, 8) de la sonde radialement entre une position de repos et une position de travail excentrée où elle est plaquée contre la paroi du puits, des moyens (6) de découplage acoustique entre la sonde (3) et le tube rigide (1), chaque sonde étant pourvue d'au moins un bras d'ancrage (9) déplaçable entre une position de fermeture et une position d'ouverture pour laquelle la sonde est en position de travail, et de moyens pour déclencher sur commande l'ouverture du bras d'ancrage, le dispositif comportant une colonne (30) pour déplacer l'ensemble des modules d'exploration dans le puits et des moyens de connexion des différentes sondes à une station de surface (31).

2. Dispositif selon la revendication 1, caractérisé en ce qu'il comporte des moyens (10) de rappel de la sonde (3) vers sa position de repos.

3. Dispositif selon la revendication 1 ou 2, caractérisé en ce que les moyens de guidage (7, 8) comportent des pièces de guidage (7) associées à la sonde à ses extrémités, des glissières (8) pour les pièces de guidage, et les moyens (6) de découplage comportent des blocs en un matériau amortisseur interposés entre la sonde et les pièces de guidage (7).

4. Dispositif selon l'une des revendications précédentes, caractérisé en ce que les moyens (10) de rappel de chaque sonde comporte un élément (13) solidaire du tube rigide (1) qui coopére avec le bras d'ancrage (9).

5. Dispositif selon l'une des revendications précédentes, caractérisé en ce que des capteurs sont placés dans les corps de sonde

6. Dispositif selon l'une des revendications précédentes, caractérisé en ce que des capteurs sont placés dans des patins d'ancrage à l'extrémité de bras d'ancrage.

7. Dispositif selon l'une des revendications précédentes, caractérisé en ce que les moyens de connexion des différentes sondes à une station de surface (31) comportent un ensemble de liaison électro-mécanique (5, 23, 26) commune reliant entre elles les différentes sondes (3).

8. Dispositif selon la revendication précédente, caractérisé en ce que ladite liaison électro-mécanique commune comporte un bloc de raccordement (17) comprenant un système de collecte (28) relié aux différents modules (M1-Mn) par un câble commun multi-lignes (5) traversant chaque sonde dont les lignes sont reliées aux capteurs, pour centraliser des signaux qui en sont issus, et des moyens (19, 22) de connexion électrique différée en milieu humide entre un câble de liaison (23) relié à la station de surface (31) et le système de collecte (37), ce bloc de raccordement (26) étant interposé entre l'ensemble des modules d'exploration (M1-Mn) et ladite colonne (30).

9. Dispositif selon l'une des revendications précédentes, caractérisé en ce que les moyens de connexion électrique différée, comportent une fiche mâle multi-contacts (19), un prolongement tubulaire (20) pour le guidage dans le bloc de raccordement (17), d'une prise femelle multi-contacts (22) reliée au câble multi-conducteurs (23), et des moyens de verrouillage (25) de la prise femelle (22) en position d'engagement.

10. Dispositif selon l'une des revendications précédentes, caractérisé en ce qu'il comporte un élément tubulaire de tête (15) comportant un balourd et un indicateur d'orientation pour déterminer le positionnement angulaire de l'ensemble des modules d'exploration (M1-Mn) par rapport à la verticale.

11. Dispositif selon l'une des revendications précédentes, caractérisé en ce que la colonne rigide (30) comporte un raccord spécial à fenêtre (32) pour le passage du câble de liaison (23).

## Claims

1. Device for exploring a subterranean formation crossed by a well, adapted to work in portions of wells (W) in which its advance under the effect of gravity is difficult and notably in horizontal well portions or well portions which are sharply inclined in relation to the vertical, which comprises a plurality of exploration modules (M1-Mn) interconnected end to end, characterised in that each module comprises a rigid tube (1) the wall of which comprises elongated openings (11a, 11b), an elongated probe (3) comprising one or more sensors, disposed inside the rigid tube (1), means (7, 8) for guiding the probe radially between a resting position and an off-centre working position in which it is pressed against the wall of the well, means (6) for acoustic decoupling between the probe (3) and the rigid tube (1), each probe being provided with at least one anchoring arm (9) movable between a closed position and an open position for which the probe is in the working position, and means for triggering the opening of the anchoring arm on command, the device comprising a string (30) for moving the assembly of the exploration of modules in the well and means for connecting the different probes to a surface station (31).

2. Device according to claim 1, characterised in that it comprises means (10) for returning the probe (3) to its resting position.

3. Device according to claim 1 or 2, characterised in that the guiding means (7, 8) comprise guiding parts (7) associated with the probe at its ends, slides (8) for the guiding parts, and the means (6) of decoupling comprise blocks made of a damping material interposed between the probe and the guiding parts (7).

4. Device according to one of the preceding claims, characterised in that the means (10) for returning each probe comprise an element (13) locked to the rigid tube (1) which co-operates with the anchoring arm (9).

5. Device according to one of the preceding claims, characterised in that sensors are placed in the probe bodies.

6. Device according to one of the preceding claims, characterised in that sensors are placed in anchoring shoes at the end of anchoring arms.

7. Device according to one of the preceding claims, characterised in that the means of connecting the different probes to a surface station (31) comprise a common electromechanical connection assembly (5, 23, 26) connecting the different probes (3) together.

8. Device according to the preceding claim, characterised in that said common electromechanical connection comprises a connecting block (17) comprising a collecting system (28) connected to the different modules (M1-Mn) by a common multi-line cable (5) passing through each probe the lines of which are connected to the sensors, to centralise the signals coming from them, and means (19, 22) for deferred electrical connection in wet surroundings between a connecting cable (23) connected to the surface station (31) and the collecting system (37), this connecting block (26) being interposed between the assembly of the exploration modules (M1-Mn) and said string (30) .

9. Device according to one of the preceding claims, characterised in that the means for deferred electrical connection comprise a multi-contact male connector (19), a tubular extension (20) for guiding a multi-contact female connector (22) connected to the multi-conductor cable (23) into the connecting block (17), and means (25) for locking the female connector (22) in the engaged position.

10. Device according to one of the preceding claims, characterised in that it comprises a tubular head element (15) with an unbalanced mass and an orientation indicator for determining the angular positioning of the assembly of the exploration modules (M1-Mn) in relation to the vertical.

11. Device according to one of the preceding claims, characterised in that the rigid string (30) comprises a special connector (32) with a window for passage of the connecting cable (23).

## Patentansprüche

1. Vorrichtung zur Exploration einer unterirdischen, von einem Bohrloch durchsetzten Formation einer Auslegung derart, daß sie in Teilen des Bohrlochs (W) betriebsbereit ist, wo ihr Fortschritt unter dem Einfluß der Schwerkraft schwierig ist, und insbesondere in horizontalen oder stark bezüglich der Vertikalen abgelenkten Teilen des Bohrlochs, welche eine Vielzahl von stirnseitig miteinander verbundenen Explorationsmodulen (M1-Mn) umfaßt, dadurch gekennzeichnet, daß jeder Modul ein steifes Rohr (1) umfaßt, dessen Wandung längliche Öffnungen (11a, 11b), eine längliche Sonde (3), die einen oder mehrere Meßwertgeber hat, umfaßt, welche im Inneren des steifen Rohres (1) angeordnet ist, sowie Führungsmittel (7, 8) der Sonde radial zwischen einer Ruhestellung und einer exzentrischen Arbeitsstellung, wo sie gegen die Wandung des Bohrlochs gepreßt wird, Mittel (6) zum akustischen Entkoppeln zwischen der Sonde (3) und dem steifen Rohr (1), wobei jede Sonde mit einem Verankerungsarm (9) versehen ist, der zwischen einer Schließstellung und einer öffnungsstellung verschiebbar ist, für die die Sonde sich in Arbeitsstellung befindet, sowie Mittel, um auf Befehl das Öffnen des Verankerungsarmes auszulösen, und die Vorrichtung eine Kolonne (30) hat, um die Gesamtheit der Explorationsmodule im Bohrloch zu verschieben, sowie Mittel zur Verbindung der verschiedenen Sonden mit einer Oberflächenstation (31).

2. Vorrichtung nach Anspruch 1, dadurch gekennzeichnet, daß sie Mittel (10) zur Rückstellung der Sonde (3) in ihre Ruhestellung umfaßt.

3. Vorrichtung nach Anspruch 1 oder 2, dadurch gekennzeichnet, daß die Führungsmittel (7, 8) Führungsstücke (7), zugeordnet zur Sonde an ihren Enden, sowie Gleitschienen (8) für die Führungsstücke umfassen, und die Mittel (6) zur Entkoppelung Blöcke aus einem dämpfenden Material umfassen, die zwischen Sonde und Führungsstücken zwischengeschaltet sind.

4. Vorrichtung nach einem der vorhergehenden Ansprüche, dadurch gekennzeichnet, daß die Rückstellmittel (10) für jede Sonde ein fest mit dem steifen Rohr verbundenes Element (1), welches mit dem Verankerungsarm (9) zusammenwirkt, umfassen.

5. Vorrichtung nach einem der vorhergehenden Ansprüche, dadurch gekennzeichnet, daß die Meßwertgeber im Gehäuse der Sonde angeordnet sind.

6. Vorrichtung nach einem der vorhergehenden Ansprüche, dadurch gekennzeichnet, daß die Meßwertgeber in Verankerungsschuhen am Ende der Verankerungsarme angeordnet sind.

7. Vorrichtung nach einem der vorhergehenden Ansprüche, dadurch gekennzeichnet, daß die Mittel zur Verbindung der verschiedenen Sonden mit einer Oberflächenstation (31) eine gemeinsame elektromechanische Verbindungsanordnung (5, 23, 26) umfassen, welche die verschiedenen Sonden (3) untereinander verbindet.

8. Vorrichtung nach dem vorhergehenden Anspruch, dadurch gekennzeichnet, daß diese gemeinsame elektromechanische Verbindung einen Anschlußblock (17) umfaßt, der ein Sammelsystem (28) aufweist, das mit den verschiedenen Modulen (M1-Mn) durch ein gemeinsames Mehrleitungskabel (5) verbunden ist, welches jede Sonde durchsetzt, deren Leitungen mit den Meßwertgebern verbunden sind, um hieraus austretende Signale zu zentralisieren, sowie Mittel (19, 22) zur verzögerten elektrischen Verbindung in feuchter Umgebung zwischen einem mit der Oberflächenstation (31) verbundenen Verbindungskabel (23) und dem Sammelsystem (37), wobei dieser Verbindungsblock (26) zwischen die Anordnung von Explorationsmodulen (M1-Mn) und diese Kolonne (30) zwischengeschaltet ist.

9. Vorrichtung nach einem der vorhergehenden Ansprüche, dadurch gekennzeichnet, daß die Mittel zur verzögerten bzw. verschobenen elektrischen Verbindung einen männlichen Mehrfachstecker (19), eine röhrenförmige Verlängerung (20) für das Führen im Verbindungsblock (17) einer Mehrfachkontaktaufnahmebuchse (22) aufweisen, die mit dem Mehrleiterkabel (23) verbunden ist, sowie Mittel zur Verriegelung der Aufnahmebuchse (22) in Eingriffsstellung.

10. Vorrichtung nach einem der vorhergehenden Ansprüche, dadurch gekennzeichnet, daß sie ein röhrenförmiges Kopfelement (15) umfaßt, das eine Unwucht und einen Orientierungsindikator aufweist, um die Winkelpositionierung der Anordnung aus Explorationsmodulen (M1-Mn) bezüglich der Vertikalen zu bestimmen.

11. Vorrichtung nach einem der vorhergehenden Ansprüche, dadurch gekennzeichnet, daß die steife Kolonne (30) einen Spezialanschluß mit Fenster (32) für die Durchführung des Verbindungskabels (23) umfaßt.
